# EUROPEAN PATENT APPLICATION

(11) **EP 3 650 518 A1**
(43) Date of publication of application: **13.05.2020**
(21) Application number: 18828020.0
(22) Date of filing: 24.05.2018
(51) Int. Cl.: C10J 3/72, C10J 3/46

(54) **BIOMASS GASIFICATION DEVICE**

(30) Priority: 05.07.2017 JP 2017131944
(71) Applicant: Sintokogio, Ltd., Aichi 450-6424 (JP)
(72) Inventor: SHIMIZU, Masanori, Toyokawa-shi Aichi 442-8505 (JP); USHIROEBISU, Koichi, Toyokawa-shi Aichi 442-8505 (JP)
(74) Representative: Müller-Boré & Partner Patentanwälte PartG mbB
(86) International application number: PCT/JP2018/020012
(87) International publication number: WO 2019/008934

(57) **Abstract**

An object of the invention is to provide a biomass gasification apparatus wherein the residue of the biomass raw material not to be deposited in a apace for gasification of the biomass material and the piping in the apparatus is hardly blocked.

There is provided a biomass gasification apparatus 1 according to the present invention, including: a furnace body 14 an inside of which is heatable; a double tube 22 having an inner cylinder 24 and an outer cylinder 26 and disposed in the furnace body so as to extend in an upward and downward direction; a communication part 40 disposed below the double tube and causing an inner space 28 of the inner cylinder and a space 30 between the inner cylinder and the outer cylinder to communicate with each other; and a residue discharging tube 42 connected to the communication part and discharging a residue of a biomass raw material to an outside from the communication part, wherein one of the inner space of the inner cylinder and the space between the inner cylinder and the outer cylinder is a space for gasification of the biomass raw material is gasified, and the other of the inner space of the inner cylinder and the space between the inner cylinder and the outer cylinder is a space in which gas after the gasification flows.

## Description

### Technical Field

The present invention relates to a biomass gasification apparatus, and in particular, relates to a structure of a biomass gasification apparatus which gasifies a biomass raw material to generate gas used for power generation and the like.

### Background Art

There is proposed a power generation system which gasifies a biomass raw material to generate electric power on a small scale in a region where the biomass raw material such as plants is easily available. As a biomass gasification apparatus which generates gas used for such a power generation system, there is known an apparatus, for example, disclosed in Patent Document 1.

With the apparatus in Patent Document 1, a temperature in a gasification space is held at 800°C or higher, steam is fed onto a fine powdery biomass raw material introduced into the gasification space to suspend the fine powdery biomass raw material in the steam stream, and thus, the biomass raw material is gasified. Since this method conducts the gasification, and steam reformation reaction which proceed without oxygen, the calories of the obtained gas are approximately twice as large as in an internal combustion-type thermal decomposition reactor, which consumes oxygen, and it shows excellent gasification performance.

### Citation List

### Patent Document

Patent Document 1: Japanese Patent Publication No. 4227771

### Summary of Invention

### Technical Problem

The aforementioned apparatus in Patent Document 1 however has a reverse U-shaped piping section in the space for gasifying biomass, and therefore, the residue of the biomass raw material and the like scattering along with the gas are deposited on this section, which problematically causes the piping to be blocked.

The present invention is achieved in view of such circumstances, and an object thereof is to provide a biomass gasification apparatus which, in a space in which a biomass raw material is gasified, allows the residue of the biomass raw material not to be deposited and the piping to be hardly blocked.

### Solution to Problem

There is provided a biomass gasification apparatus according to the present invention, including:
a furnace body an inside of which is heatable;
a double tube having an inner cylinder and an outer cylinder and disposed in the furnace body so as to extend in an upward and downward direction;
a communication part disposed below the double tube and causing an inner space of the inner cylinder and a space between the inner cylinder and the outer cylinder to communicate with each other; and
a residue discharging tube connected to the communication part and discharging a residue of a biomass raw material to an outside from the communication part, wherein
one of the inner space of the inner cylinder and the space between the inner cylinder and the outer cylinder is a space for gasification of the biomass raw material, and
the other of the inner space of the inner cylinder and the space between the inner cylinder and the outer cylinder is a space in which gas after the gasification flows.

According to such a configuration, since both the space in which the biomass raw material is gasified and the space in which the gas after the gasification flows take configurations extending in the upward and downward direction, the biomass residue and the like can be suppressed from being deposited to block the piping in these spaces.

According to another preferable aspect of the present invention, a biomass raw material feed tube which feeds the biomass raw material, and a steam feed tube which feeds steam are connected to an upper part of the double tube.

According to such a configuration, since the biomass raw material feed tube and the steam feed tube are connected to the upper part of the double tube, the fed biomass raw material moves (falls) in the space for gasification with the gravity, not requiring special power.

Moreover, since the biomass raw material is brought into contact with the steam as soon as it is introduced into the space for gasification, a time for the biomass raw material being in contact with the steam can be prolonged, and the biomass raw material can be efficiently gasified.

According to another preferable aspect of the present invention,
a biomass raw material feed tube and the steam feed tube are connected to an upper part of the inner cylinder, and
the inner space of the inner cylinder is the space in which the biomass raw material is gasified.

According to another preferable aspect of the present invention, a steam ejecting nozzle which ejects steam in a substantially circumferential direction of the inner space of the inner cylinder is provided at a tip of the steam feed tube.

According to such a configuration, the steam ejecting nozzle generates a rotational stream of steam flowing in the circumferential direction in the inner space of the inner cylinder. Then, the biomass raw material introduced into the space in the inner cylinder of the double tube falls while rotating in the space for gasification, carried by this rotational stream of steam. As a result, the biomass raw material can be efficiently gasified.

According to another preferable aspect of the present invention, a plurality of the steam ejecting nozzles is provided at predetermined angle intervals in the circumferential direction.

According to such a configuration, the rotational stream of steam can be efficiently generated in the inner space of the inner cylinder.

According to another preferable aspect of the present invention,
a rotational stream generating member having a conical upper surface is provided in an upper part of the inner space of the inner cylinder, and
the steam ejecting nozzle ejects the steam downward in the substantially circumferential direction along the upper surface of the rotational stream generating member.

According to such a configuration, the biomass raw material introduced into the space in the inner cylinder of the double tube is temporarily held on the conical upper surface of the rotational stream generating member, is blown off with the steam ejected from the steam ejecting nozzle, and falls while rotating in the space for gasification. As a result, a time for the biomass raw material being in contact with the steam can be prolonged, and the biomass raw material can be efficiently gasified.

According to another preferable aspect of the present invention, a lower end of the outer cylinder extends to a lower part below a lower end of the inner cylinder, and a portion which is below the lower end of the inner cylinder and is enclosed by the outer cylinder constitutes the communication part.

According to such a configuration, since the communication part can be constituted only of the outer cylinder and the inner cylinder, the apparatus is simple, and maintenance thereof can be easy.

According to another preferable aspect of the present invention, in a lower part of the inner space of the inner cylinder, a receiving surface which receives the biomass raw material falling from an upper part thereof is provided.

According to such a configuration, since the biomass raw material falling from the upper part is once placed on the receiving surface, a time for the biomass raw material being in contact with the steam can be further prolonged, which can further reduce an unreacted portion of the biomass raw material.

According to another preferable aspect of the present invention, an oxidizing agent feed port which feeds an oxidizing agent is provided on the receiving surface.

According to such a configuration, since the oxidizing agent feed port is provided on the receiving surface which receives the falling biomass raw material, the biomass raw material placed on the receiving surface can be oxidized on the receiving surface, which can further reduce an unreacted portion of the biomass raw material placed on the receiving surface.

According to another preferable aspect of the present invention, the receiving surface is formed on a top surface of a columnar body disposed in the lower part of the inner space of the inner cylinder and configured to be rotatable along a center axis line of the inner cylinder.

According to such a configuration, forming the receiving surface on the top surface of the columnar body can prolong a time for the biomass raw material passing between the columnar body and the inner cylinder, which can further reduce an unreacted portion of the biomass raw material.

According to another preferable aspect of the present invention, the columnar body has a truncated cone shape.

According to such a configuration, by the columnar body having the truncated cone shape, clogging with the biomass raw material can be suppressed between the columnar body and the inner cylinder.

According to another preferable aspect of the present invention, a scraping member extending in a radially outward direction on an outer circumferential surface of the columnar body is included.

According to such a configuration, the biomass raw material deposited at radially outward position of the columnar body can be scraped off, and the residue of the biomass raw material can be smoothly discharged.

According to another preferable aspect of the present invention,
a lid member closing the lower end of the outer cylinder;
an opening formed in the lid member and communicating with the residue discharging tube; and
a scraper which is rotatably disposed on the lid member and causes a residue deposited on the lid member to fall off into the opening are included.

According to such a configuration, the residue of the biomass raw material deposited on the bottom part of the apparatus can be securely discharged.

### Effects of Invention

According to the present invention, there is provided a biomass gasification apparatus which, in a space in which a biomass raw material is gasified, allows dusts such as a biomass residue not to be deposited and piping to be hardly blocked.

### Brief Description of Drawings

[Figure 1] Figure 1 is a longitudinal cross-sectional view schematically showing a configuration of a biomass gasification apparatus of a first embodiment of the present invention.
[Figure 2] Figure 2 is a longitudinal cross-sectional view schematically showing a configuration of a biomass gasification apparatus of a second embodiment of the present invention.
[Figure 3] Figure 3 is a longitudinal cross-sectional view schematically showing a configuration of a biomass gasification apparatus of a third embodiment of the present invention.
[Figure 4] Figure 4 is a plan view of a rotational stream generating member provided in the biomass gasification apparatus of the third embodiment.
[Figure 5] Figure 5 is a longitudinal cross-sectional view schematically showing a lower structure of a double tube of a biomass gasification apparatus of a fourth embodiment of the present invention.
[Figure 6] Figure 6 is a view showing a scraping member used for the biomass gasification apparatus of the fourth embodiment.
[Figure 7] Figure 7 is a view showing a modification of the scraping member used for the biomass gasification apparatus of the fourth embodiment.
[Figure 8] Figure 8 is a view showing another modification of the scraping member used for the biomass gasification apparatus of the fourth embodiment.

### Description of Embodiments

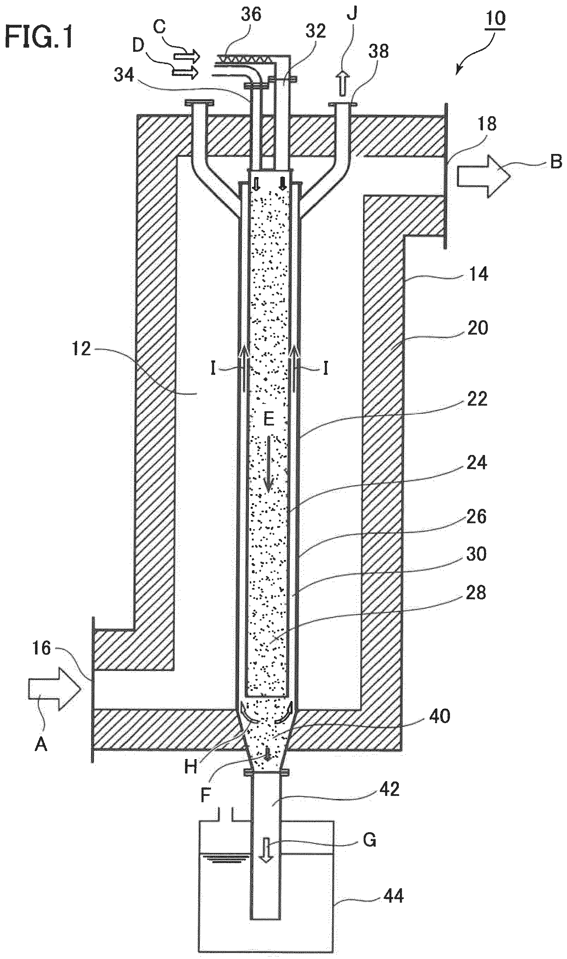

Hereafter, a biomass gasification apparatus 10 according to a first embodiment of the present invention is described with reference to the drawings. Figure 1 is a longitudinal cross-sectional view schematically showing a configuration of the biomass gasification apparatus 10 of the first embodiment of the present invention.

The biomass gasification apparatus 10 includes a hollow furnace body 14 having an inner space 12 extending in the upward and downward direction. A high temperature gas introducing port 16 for introducing high temperature gas into the inner space 12 is provided in a lower part of the furnace body 14. Moreover, in an upper part of the furnace body 14, is provided a high temperature gas discharging port 18 for discharging, from the furnace body 14, high temperature gas which has been introduced into the inner space 12 from the high temperature gas introducing port 16. Furthermore, the wall of the furnace body 14 is covered by a heat insulating material 20.

With such a configuration of the biomass gasification apparatus 10, high temperature gas is introduced into the inner space 12 from the high temperature gas introducing port 16, and can heat the inner space 12 to a high temperature, for example, to a temperature of 850°C or higher.

A double tube 22 disposed to extend in the upward and downward direction is provided in the inner space 12 of the biomass gasification apparatus 10. The double tube 22 is constituted of an inner cylinder 24 and an outer cylinder 26 and includes, inside thereof, an inner space 28 formed inside of the inner cylinder 24, and an annular space 30 formed between the inner cylinder 24 and the outer cylinder 26. The inner cylinder 24 and the outer cylinder 26 constituting the double tube 22 can be composed of various materials having heat resistance and corrosion resistance, and are particularly preferably composed of stainless steel in view of heat resistance and corrosion resistance. The upper ends of the inner space 28 inside of the inner cylinder 24 and the annular space 30 between the inner cylinder 24 and the outer cylinder 26 are closed.

A biomass raw material feed tube 32 which feeds a biomass raw material into the inner space 28 of the inner cylinder 24, and a steam feed tube 34 which feeds steam into the inner space 28 of the inner cylinder 24 are connected to the closed upper end part of the inner cylinder 24. A biomass feeder 36 for quantitatively feeding the biomass raw material is connected to the upstream side of the biomass raw material feed tube 32.

Moreover, a generated gas discharging tube 38 is joined to an upper end part of the outer cylinder 26 of the double tube 22, and is configured so as to cause an upper part of the annular space 30 between the inner cylinder 24 and the outer cylinder 26 to communicate with a space outside the biomass gasification apparatus 10.

A suction fan (not-shown) is provided in the generated gas discharging tube 38, and evacuates the annular space 30 between the inner cylinder 24 and the outer cylinder 26 from the upper end side to give the inside of the double tube 22 a negative pressure. During operation of the biomass gasification apparatus 10 of the present embodiment, this suction fan generates a gas stream toward the upper end of the annular space 30 from the upper end of the inner space 28 of the inner cylinder 24 through the lower ends of the inner space 28 of the inner cylinder 24 and the annular space 30.

A communication part 40 which causes the inner space 28 of the inner cylinder 24 and the annular space 30 between the inner cylinder 24 and the outer cylinder 26 to communicate with each other is provided below the double tube 22. As shown in Figure 1, in the biomass gasification apparatus 10 of the present embodiment, the lower end of the outer cylinder 26 extends to a lower part below the lower end of the inner cylinder 24, and a portion which is below the lower end of the inner cylinder 24 and is enclosed by the outer cylinder 26 constitutes the communication part 40.

The upper end of a residue discharging tube 42 for discharging the residue of the biomass raw material after reaction to the outside is connected to the lower end part of the communication part 40. The lower end of the residue discharging tube 42 is connected to a water tight tank 44.

With such a configuration, the inner space 28 of the inner cylinder 24 is a space is a space for gasification, that is, in which space the biomass raw material is gasified, and the annular space 30 between the inner cylinder 24 and the outer cylinder 26 is a space in which gas after the gasification flows.

Next, operation of the biomass gasification apparatus 10 of the first embodiment will be described.

In the biomass gasification apparatus 10, first, high temperature gas with an atmospheric temperature of 850°C or higher is introduced into the inner space 12 of the furnace body 14 from the high temperature gas introducing port 16 (arrow A) to heat the double tube 22 disposed at the center part of the inner space 12. Extra high temperature gas is discharged through the high temperature gas discharging port 18 (arrow B).

After the double tube is heated sufficiently, for example, at approximately 850°C, the biomass raw material which is the raw material of gasification is quantitatively input to the upper part of the inner space 28 of the inner cylinder 24 from the biomass feeder 36 through the biomass raw material feed tube 32 (arrow C). The biomass raw material may be any kind of granular or powdery organic matter which generates gas, and is particularly preferably a woody material, a food residue, an agricultural residue or the like, for example.

Simultaneously to the input of the biomass raw material, steam is introduced into the upper part of the inner space 28 of the inner cylinder 24 of the double tube 22 through the steam feed tube 34 (arrow D).

The biomass raw material input into the inner space 28 of the inner cylinder 24 falls through the inner space 28 of the inner cylinder 24 along with the steam introduced through the steam feed tube 34 (arrow E). Since the double tube 22 is disposed in the inner space 12 heated to 850°C or higher, the inner space 28 of the inner cylinder 24 is also heated at approximately 850°C. As a result, the biomass raw material falling through the inner space 28 of the inner cylinder 24 along with the steam generates gas through gasification reaction. The generated gas is reformed through gas reformation reaction with the steam.

The biomass raw material having reached the lower end of the inner space 28 of the inner cylinder 24 passes through the communication part 40 (arrow F), and is discharged to the water tight tank 44 through the residue discharging tube 42 as a residue (arrow G).

Meanwhile, the gas generated from the biomass raw material is introduced into the communication part 40 from the lower end of the inner space 28 of the inner cylinder 24, flows in a radially outward direction (arrow H), and flows into the lower end of the annular space 30 between the inner cylinder 24 and the outer cylinder 26. Furthermore, it rises in the annular space 30 between the inner cylinder 24 and the outer cylinder 26 (arrow I), and is discharged through the generated gas discharging tube 38 connected to the upper end of the annular space 30 (arrow J) to be used for power generation and the like.

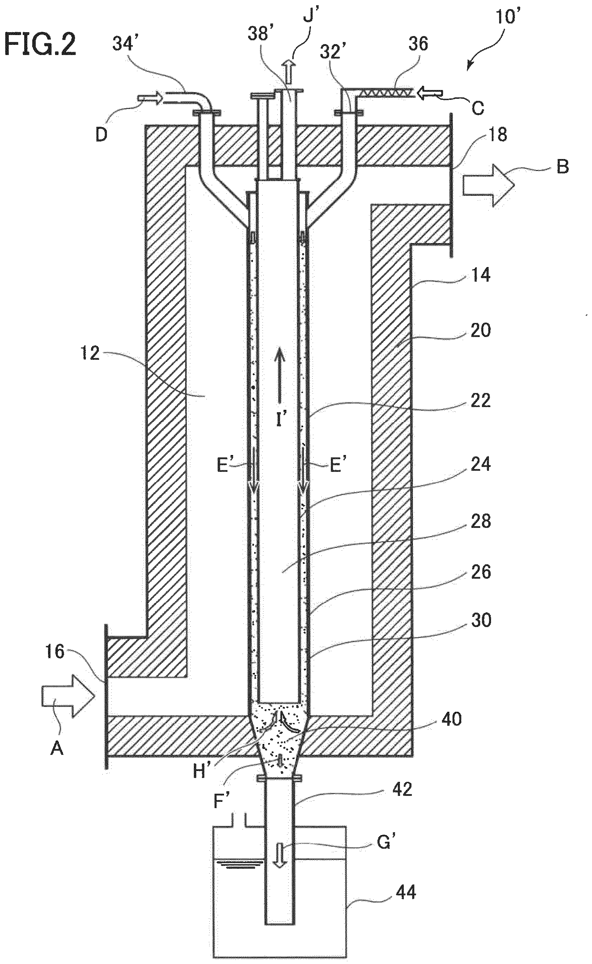

Next, a biomass gasification apparatus 10' according to a second embodiment of the present invention will be described with Figure 2. Figure 2 is a longitudinal cross-sectional view, similar to Figure 1, schematically showing a configuration of the biomass gasification apparatus 10' of the second embodiment of the present invention.

The biomass gasification apparatus 10' of the second embodiment of the present invention has a basic configuration similarly to that of the biomass gasification apparatus 10 of the first embodiment. Differences between the biomass gasification apparatus 10' of the second embodiment and the biomass gasification apparatus 10 of the first embodiment are connecting places of the biomass raw material feed tube, the steam feed tube and the generated gas discharging tube.

In the biomass gasification apparatus 10 of the first embodiment, the biomass raw material feed tube 32 and the steam feed tube 34 are joined to the inner cylinder 24 so as to communicate with the upper part of the inner space 28 of the inner cylinder 24, and the generated gas discharging tube 38 is joined to the outer cylinder 26 so as to communicate with the upper part of the annular space 30 between the inner cylinder 24 and the outer cylinder 26. On the contrary, in the biomass gasification apparatus 10' of the second embodiment, a biomass raw material feed tube 32' and a steam feed tube 34' are joined to the outer cylinder 26 so as to communicate with the upper part of the annular space 30 between the inner cylinder 24 and the outer cylinder 26, and a generated gas discharging tube 38' is joined to the inner cylinder 24 so as to communicate with the upper part of the inner space 28 of the inner cylinder 24.

With such a configuration of the biomass gasification apparatus 10' of the second embodiment, the annular space 30 between the inner cylinder 24 and the outer cylinder 26 is a space in which the biomass raw material is gasified, and the inner space 28 of the inner cylinder 24 is a space in which generated gas after the gasification flows.

As a result, the biomass raw material which is the raw material of gasification is input from the upper part of the annular space 30 between the inner cylinder 24 and the outer cylinder 26 through the biomass raw material feed tube 32' from the biomass feeder 36, and likewise, steam is also introduced from the upper part of the annular space 30 between the inner cylinder 24 and the outer cylinder 26.

The biomass raw material input into the annular space 30 between the inner cylinder 24 and the outer cylinder 26 falls through the annular space 30 between the inner cylinder 24 and the outer cylinder 26 along with the steam introduced through the steam feed tube 34' (arrow E'). Since the double tube 22 is disposed in the inner space 12 heated to 850°C or higher, the annular space 30 between the inner cylinder 24 and the outer cylinder 26 is also heated. As a result, the biomass raw material falling through the annular space 30 between the inner cylinder 24 and the outer cylinder 26 along with the steam generates gas through gasification reaction. The generated gas is reformed through gas reformation reaction with the steam.

The biomass raw material having reached the lower end of the annular space 30 between the inner cylinder 24 and the outer cylinder 26 passes through the communication part 40 (arrow F'), and is discharged to the water tight tank 44 through the residue discharging tube 42 as a residue (arrow G').

Meanwhile, the gas generated from the biomass raw material is introduced into the communication part 40 from the lower end of the annular space 30 between the inner cylinder 24 and the outer cylinder 26, flows in the radially inward direction (arrow H'), and flows into the lower end of the inner space 28 of the inner cylinder 24. Furthermore, it rises in the inner space 28 of the inner cylinder 24 (arrow I'), and is discharged through the generated gas discharging tube 38' connected to the upper end of the inner space 28 of the inner cylinder 24 (arrow J').

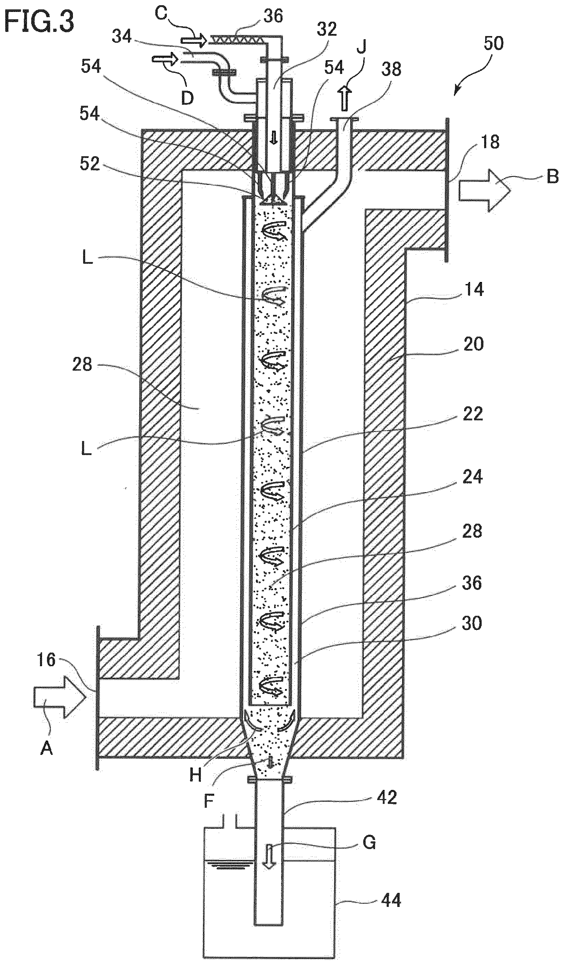

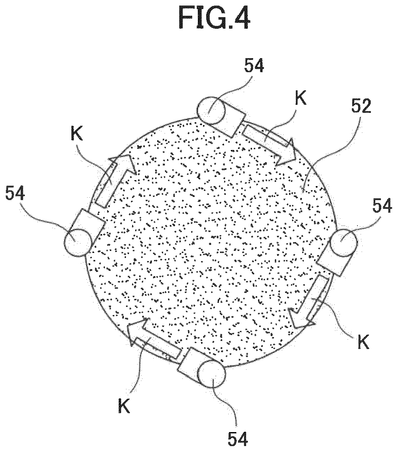

Next, a biomass gasification apparatus 50 of a third embodiment of the present invention will be described referring to Figure 3 and Figure 4.
Figure 3 is a longitudinal cross-sectional view, similar to Figure 1 and Figure 2, schematically showing a configuration of the biomass gasification apparatus 50 of the third embodiment of the present invention. Figure 4 is a plan view of a rotational stream generating member provided in the biomass gasification apparatus 50 of the third embodiment.

The biomass gasification apparatus 50 of the third embodiment has the similar basic configuration to that of the biomass gasification apparatus 10 of the first embodiment. A difference between the biomass gasification apparatus 50 of the third embodiment and the biomass gasification apparatus 10 of the first embodiment is a structure of the upper part of the inner cylinder. This difference is hereafter described.

In the biomass gasification apparatus 50 of the third embodiment, a conical rotational stream generating member 52 having a conical upper surface tapered upward is attached to the upper end part of the inner space 28 of the inner cylinder 24. The diameter of the bottom part of the rotational stream generating member 52 is set to be smaller than the inner diameter of the inner space 28 of the inner cylinder 24, and an annular gap is formed between the outer edge of the bottom part of the rotational stream generating member 52 and the inner circumferential surface of the inner space 28 of the inner cylinder 24.

In the biomass gasification apparatus 50 of the third embodiment, the biomass raw material feed tube 32 is disposed such that the biomass raw material is input onto the center part of the conical upper surface of the Rotational stream generating member 52 from the above.

In the biomass gasification apparatus 50 of the third embodiment, four ejecting nozzles 54 are connected to the tip of the steam feed tube 34. As shown in Figure 4, the four ejecting nozzles 54 are arranged at radially outward positions above the conical upper surface of the rotational stream generating member 52 so as to be angularly spaced by 90 degrees.

As indicated by an arrow K, each nozzle 54 is oriented so as to eject steam downward in the substantially circumferential direction along the conical upper surface of the rotational stream generating member. The direction of the steam stream is preferably oriented to an inward (center-side) orientation relative to the circumferential direction (tangential direction).

The number of ejecting nozzles 54 is preferably four, as in the third embodiment, in view of costs and effects, not specially limited.

Next, operation of the biomass gasification apparatus 50 of the third embodiment will be described mainly on differences from the operation of the biomass gasification apparatus 10 of the first embodiment.

During operation of the biomass gasification apparatus 50 of the third embodiment, the ejecting nozzles 54 form rotational flows (streams) of steam which progress in the circumferential direction and in the downward direction, along the conical upper surface of the rotational stream generating member 52 disposed in the upper part of the inner space 28 of the inner cylinder 24.

The biomass raw material input onto the center part of the conical upper surface of the rotational stream generating member 52 through the biomass raw material feed tube 32 falls while rotating in the inner space 28 of the inner cylinder 24, carried by the rotational flows of steam generated by the ejecting nozzles 54 (arrow L). As a result, a time for gasification reaction of the biomass raw material and a time for gas reformation reaction with the steam in the inner space 28 of the inner cylinder 24 can be prolonged, which realize the enables efficient gas generation.

Operation and the like after the biomass raw material and the like reach the lower end of the inner space 28 of the inner cylinder 24 are similar to those for the biomass gasification apparatus 10 of the first embodiment.

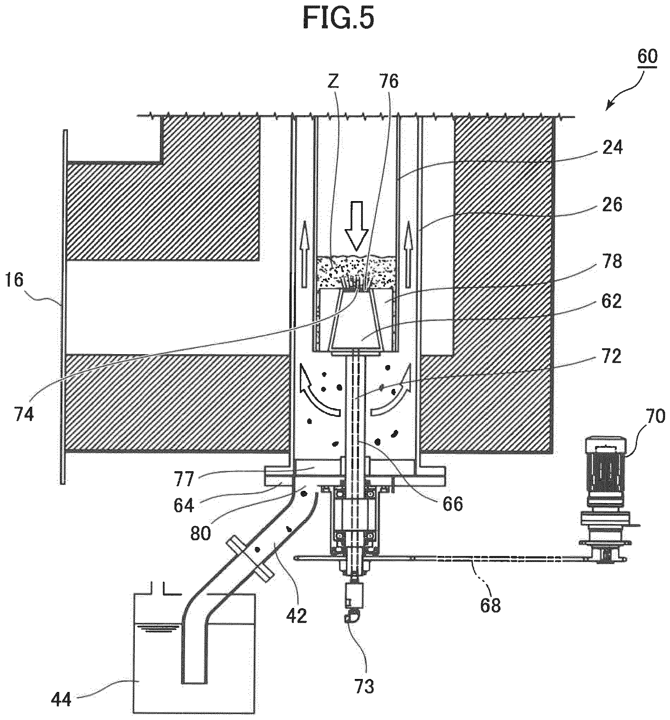

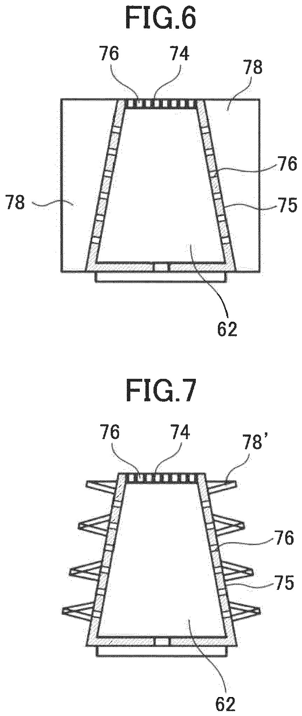

Next, a biomass gasification apparatus 60 of a fourth embodiment of the present invention will be described referring to Figure 5 and Figure 6.

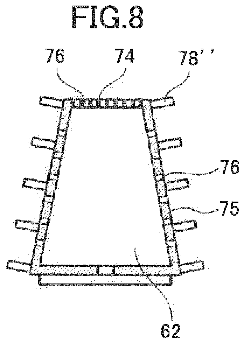

Figure 5 is a longitudinal cross-sectional view schematically showing a lower configuration of the double tube of the biomass gasification apparatus 60 of the fourth embodiment of the present invention. Figure 6 is a view showing a scraping member used for the biomass gasification apparatus 60 of the fourth embodiment. Figure 7 and Figure 8 are views showing modifications of the scraping member used for the biomass gasification apparatus 60 of the fourth embodiment.

The biomass gasification apparatus 60 of the fourth embodiment has the similar basic configuration to that of the biomass gasification apparatus 10 of the first embodiment. A difference between the biomass gasification apparatus 60 of the fourth embodiment and the biomass gasification apparatus 10 of the first embodiment is a lower structure of the inner cylinder. This difference is hereafter described.

In the biomass gasification apparatus 60 of the fourth embodiment, a hollow columnar body 62 with a truncated cone shape is disposed at the center of the lower end part of the inner space 28 of the inner cylinder 24. The diameter of the large diameter part (bottom part) of the truncated cone-shaped columnar body 62 is set to be smaller than the inner diameter of the outer cylinder 26, and as a result, an annular gap with approximately millimeters of width is formed between the outer circumferential edge of the bottom part of the truncated cone-shaped columnar body 62 and the inner circumferential surface of the outer cylinder 26.

In the biomass gasification apparatus 60, the bottom part of the outer cylinder 26 of the double tube 22 is closed with a bottom lid 64, and the columnar body 62 is attached, rotatably relative to the inner cylinder, to the upper end of a rotary shaft 66 extending to penetrate this bottom lid 64. The rotary shaft 66 is rotated and driven by a motor 70 via a chain 68.

The rotary shaft 66 includes an oxidizing agent passage 72 which extending axially through the rotary shaft 66, and the oxidizing agent passage 72 communicates with an oxidizing agent introducing port 73 which is provided at the lower end of the rotary shaft 66 and introduces an oxidizing agent such as air or oxygen. The oxidizing agent passage 72 communicates with oxidizing agent feed ports 76 provided on a top surface 74 and a side surface 75 of the columnar body 62, via the inner space of the columnar body 62.

A rotatable scraper 77 connected to the rotary shaft 66 is disposed on the bottom lid 64. Furthermore, an opening 80 which communicates with the residue discharging tube 42 for discharging the residue of the biomass raw material is formed in the bottom lid 64.

A plurality of plate-shaped scraping members 78 extending in the radially outward direction is attached onto the outer circumferential surface of the columnar body 62 at predetermined angular intervals. The scraping members 78 each has a rectangular shape a radial tip of which extends along the inner circumferential surface of the inner cylinder 24, and they are attached to four places on the outer circumferential surface of the columnar body 62 at 90° of angle intervals.

Next, operation of the biomass gasification apparatus 60 of the fourth embodiment will be described mainly on differences from the operation of the biomass gasification apparatus 10 of the first embodiment.

In the biomass gasification apparatus 60 of the fourth embodiment, since the top surface 74 of the truncated cone-shaped columnar body 62 is disposed in the lower end part of the inner space 28 of the inner cylinder 24, the biomass raw material falling through the inner space similarly to the biomass gasification apparatus 10 of the first embodiment is placed on the top surface 74 of the truncated cone-shaped columnar body 62, or slides down along the outer circumferential surface of the truncated cone-shaped columnar body 62 to fall downward through the gap between the bottom surface of the truncated cone-shaped columnar body 62 and the inner circumferential surface of the inner cylinder 24.

However, the gap between the bottom surface of the truncated cone-shaped columnar body 62 and the inner circumference surface of the inner cylinder 24 is approximately a few millimeters, hence, the biomass is to be gradually deposited between the side surface of the truncated cone-shaped columnar body 62 and the inner circumference surface of the inner cylinder 24, and a biomass raw material Z is to be being deposited on the upper part of the truncated cone-shaped columnar body 62 (Figure 5).

Meanwhile, during operation of the biomass gasification apparatus 60, the oxidizing agent such as oxygen or outside air is blowing out from the oxidizing agent feed ports 76 provided on the top surface 74 and the side surface 75 of the columnar body 62 through the oxidizing agent passage 72. This oxidizing agent oxidizes the gas generated from the biomass raw material to generate heat. This generated heat further heats the biomass raw material deposited around the truncated cone-shaped columnar body 62 to promote the gasification reaction in an unreacted portion of the deposited biomass raw material.

Furthermore, during operation of the biomass gasification apparatus 60, the conical columnar body 62 is rotated at low speed around the rotary shaft 66 by the motor 70. As a result, the scraping members 78 attached onto the outer circumferential surface of the columnar body 62 also rotate along with the columnar body 62 to gradually scrape the residue of the biomass raw material and the like deposited between the columnar body 62 and the inner circumferential surface of the inner cylinder downwardly through the gap between the bottom surface of the columnar body 62 and the inner circumferential surface of the inner cylinder 24.

Notably, since the rotational speed of the scraping members 78 is a relatively low speed, the speed of discharging the biomass raw material Z between the side surface of the truncated cone-shaped columnar body 62 and the inner circumferential surface of the inner cylinder 24 with rotation of the scraping members 78 is low. As a result, the biomass raw material having fallen through the inner space is always deposited in the space between the side surface of the truncated cone-shaped columnar body 62 and the inner circumferential surface of the inner cylinder 24.

The residue of the biomass raw material scraped downward is deposited on the bottom lid 64, is sent into the opening 80 communicating with the residue discharging tube 42 for discharging the residue of the biomass raw material with the rotating scraper 77, and is discharged to the water tight tank 44.

Figure 7 and Figure 8 are views, similar to Figure 6, showing modifications of the scraping member(s) attached onto the outer circumferential surface of the cone-shaped columnar body 62. A scraping member 78' shown in Figure 7 has a male screw shape. Moreover, scraping members 78" shown in Figure 8 are constituted of a plurality of pin members randomly attached onto the outer circumferential surface of the cone-shaped columnar body 62.

The aforementioned embodiments of the present invention are not limited but can be modified or varied in various manners within the scope of the technical concept disclosed in the claims.

For example, the present invention may take a configuration in which both the upper structure of the inner cylinder of the biomass gasification apparatus 50 of the third embodiment and the lower structure of the inner cylinder of the biomass gasification apparatus 60 of the fourth embodiment are incorporated into the biomass gasification apparatus 10 of the first embodiment.

### Reference Numerals

- 10:: biomass gasification apparatus
- 12:: inner space
- 14:: furnace body
- 16:: high temperature gas introducing port
- 18:: high temperature gas discharging port
- 22:: double tube
- 24:: inner cylinder
- 26:: outer cylinder
- 28:: inner space
- 30:: annular space
- 32:: biomass raw material feed tube
- 34:: steam feed tube
- 40:: communication part
- 42:: residue discharging tube
- 52:: rotational stream generating member
- 54:: ejecting nozzle
- 62:: columnar body
- 64:: bottom lid
- 66:: rotary shaft
- 70:: motor
- 72:: oxidizing agent passage
- 73:: oxidizing agent introducing port
- 74:: top surface
- 76:: oxidizing agent feed port
- 77:: scraper
- 78:: scraping member

## Claims

1. A biomass gasification apparatus comprising:
a furnace body an inside of which is heatable;
a double tube having an inner cylinder and an outer cylinder and disposed in the furnace body so as to extend in an upward and downward direction;
a communication part disposed below the double tube and causing an inner space of the inner cylinder and a space between the inner cylinder and the outer cylinder to communicate with each other; and
a residue discharging tube connected to the communication part and discharging a residue of a biomass raw material to an outside from the communication part, wherein
one of the inner space of the inner cylinder and the space between the inner cylinder and the outer cylinder is a space for gasification of the biomass raw material, and
the other of the inner space of the inner cylinder and the space between the inner cylinder and the outer cylinder is a space in which gas after the gasification flows.

2. The biomass gasification apparatus according to Claim 1, wherein a biomass raw material feed tube which feeds the biomass raw material, and a steam feed tube which feeds steam are connected to an upper part of the double tube.

3. The biomass gasification apparatus according to Claim 1, wherein
a biomass raw material feed tube and the steam feed tube are connected to an upper part of the inner cylinder, and
the inner space of the inner cylinder is the space in which the biomass raw material is gasified.

4. The biomass gasification apparatus according to Claim 3, wherein a steam ejecting nozzle which ejects steam in a substantially circumferential direction of the inner space of the inner cylinder is provided at a tip of the steam feed tube.

5. The biomass gasification apparatus according to Claim 4, wherein a plurality of the steam ejecting nozzles are provided at predetermined angle intervals in the circumferential direction.

6. The biomass gasification apparatus according to Claim 4 or 5, wherein
a rotational streamgenerating member having a conical upper surface is provided in an upper part of the inner space of the inner cylinder, and
the steam ejecting nozzle ejects the steam downward in the substantially circumferential direction along the upper surface of the rotational streamgenerating member.

7. The biomass gasification apparatus according to any one of claims 1 to 6, wherein a lower end of the outer cylinder extends to a lower part below a lower end of the inner cylinder, and a portion which is below the lower end of the inner cylinder and is enclosed by the outer cylinder constitutes the communication part.

8. The biomass gasification apparatus according to Claim 7, wherein in a lower part of the inner space of the inner cylinder, a receiving surface which receives the biomass raw material falling from an upper part thereof is provided.

9. The biomass gasification apparatus according to Claim 8, wherein an oxidizing agent feed port which feeds an oxidizing agent is provided on the receiving surface.

10. The biomass gasification apparatus according to Claim 8 or 9, wherein the receiving surface is formed on a top surface of a columnar body disposed in the lower part of the inner space of the inner cylinder and configured to be rotatable along a center axis line of the inner cylinder.

11. The biomass gasification apparatus according to Claim 10, wherein the columnar body has a truncated cone shape.

12. The biomass gasification apparatus according to Claim 10 or 11, comprising a scraping member extending in a radially outward direction on an outer circumferential surface of the columnar body.

13. The biomass gasification apparatus according to any one of Claims 7 to 12, comprising:
a lid member closing the lower end of the outer cylinder;
an opening formed in the lid member and communicating with the residue discharging tube; and
a scraper which is rotatably disposed on the lid member and causes a residue deposited on the lid member to fall off into the opening.
